(19) Europäisches Patentamt / European Patent Office / Office européen des brevets

(11) **EP 1 881 186 B1**

(12) **EUROPÄISCHE PATENTSCHRIFT**

(45) Veröffentlichungstag und Bekanntmachung des Hinweises auf die Patenterteilung:
**22.03.2017 Patentblatt 2017/12**

(51) Int Cl.:
*F02D 41/22* *(2006.01)*    *F02D 41/04* *(2006.01)*
*F02D 41/14* *(2006.01)*    *G01M 15/06* *(2006.01)*
*F02D 33/02* *(2006.01)*

(21) Anmeldenummer: **07112508.2**

(22) Anmeldetag: **16.07.2007**

(54) **Verfahren zum Betreiben einer Brennkraftmaschine mit mehreren Zylindern**

Method for operating an internal combustion engine with plural cylinders

Procédé destiné au fonctionnement d'un moteur à combustion interne doté de plusieurs cylindres

(84) Benannte Vertragsstaaten:
**DE FR GB IT**

(30) Priorität: **19.07.2006 DE 102006033482**

(43) Veröffentlichungstag der Anmeldung:
**23.01.2008 Patentblatt 2008/04**

(73) Patentinhaber: **ROBERT BOSCH GMBH**
**70442 Stuttgart (DE)**

(72) Erfinder:
• **Willimowski, Markus**
  **71691, Freiberg A.N. (DE)**
• **Boehme, Dominik**
  **50969, Köln (DE)**

(56) Entgegenhaltungen:
DE-A1- 3 105 331    DE-A1-102004 042 193
US-A- 4 606 224    US-A- 6 055 852

**EP 1 881 186 B1**

**Beschreibung**

Stand der Technik

Die Erfindung betrifft ein Verfahren zum Betreiben einer Brennkraftmaschine mit mehreren Zylindern nach dem Oberbegriff des Anspruchs 1. Gegenstand der Erfindung ist ferner ein Computerprogramm, ein elektrisches Speichermedium und eine Steuer- und/oder Regeleinrichtung nach den Oberbegriffen der nebengeordneten Patentansprüche.

Ein Verfahren der eingangs genannten Art ist beispielsweise aus der DE 197 34 680 A1 und der DE 100 25 846 A1 bekannt. In diesen Dokumenten sind Verfahren offenbart, bei denen im unbefeuerten, jedoch geschleppten Betrieb einer Brennkraftmaschine bei insgesamt konstanter Drehzahl der Zylinder ein individueller Drehzahlverlauf erfasst und hieraus auf zylinderindividuelle Mängel in Dichtigkeit der Brennräume der Brennkraftmaschine geschlossen wird. Durch derartige, von Zylinder zu Zylinder unterschiedliche Undichtigkeiten kommt es zu einer Kompressionsverminderung und kann es zum einen zu einer ungleichförmigen Verbrennung kommen, aus relativen Druckverlaufsdifferenzen können zum anderen aber auch Kurbelwellen- oder Pleuellagerschäden entstehen.

Aus der US 4,606,224 ist ein Verzögerungs-basierter Kompressionstest bekannt. Hierbei wird die Kompression eines Verbrennungsmotors bestimmt, indem die Verzögerung der Motor-Geschwindigkeit aufgrund der einzelnen Zylinder-Kompressionstakte gemessen wird. Die US 6,055,852 zeigt ein Verfahren zur Abschätzung der relativen Zylinder-Kompressionsbalance aufgrund von Informationen über die Motorgeschwindigkeit und -position.

Offenbarung der Erfindung

Technische Aufgabe

Die vorliegende Erfindung hat die Aufgabe, ein Verfahren der eingangs genannten Art bereit zu stellen, welches die Bestimmung jenes Zylinders der Brennkraftmaschine, welcher die größte Kompressionsverminderung aufzeigt, zuverlässig und mit einfachen Mitteln ermöglicht.

Technische Lösung

Diese Aufgabe wird durch ein Verfahren mit den Merkmalen des Anspruchs 1 gelöst. Vorteilhafte Weiterbildungen sind in den Unteransprüchen genannt. Weitere Lösungen sind in den nebengeordneten Patentansprüchen angegeben, die ein Computerprogramm, ein elektrisches Speichermedium und eine Steuer- und/oder Regeleinrichtung betreffen. Darüber hinaus finden sich für die Erfindung wesentliche Merkmale in der nachfolgenden Beschreibung und in der Zeichnung. Dabei können die Merkmale auch in ganz unterschiedlichen Kombinationen für die Erfindung wesentlich sein, ohne dass hierauf jeweils im Einzelnen hingewiesen wird.

Vorteilhafte Wirkungen

Erfindungsgemäß wurde erkannt, dass das Drehzahlsignal einer Brennkraftmaschine zylinderindividuelle und kompressionsspezifische Informationen enthält, wenn keine Verbrennung stattfindet und keine Schleppkraft auf die Brennkraftmaschine einwirkt. Dies ist beispielsweise dann der Fall, wenn die Brennkraftmaschine abgeschaltet wurde und ausläuft. Nach einer Abschaftanforderung absolviert die Brennkraftmaschine noch mehrere Arbeitsspiele, bevor sie endgültig zum Stillstand kommt. In diesem Betriebszustand verringert sich die Drehzahl der Brennkraftmaschine kontinuierlich aufgrund von Verlusten, beispielsweise mechanischer Reibung. Das vorgeschlagene Verfahren hat demnach den Vorteil, dass es im normalen Betrieb der Brennkraftmaschine, beispielsweise jedes Mal dann, wenn diese abgeschaltet wird, durchgeführt werden kann. Ein spezieller Betriebszustand, der beispielsweise nur in einer Werkstatt herbeigeführt werden kann, ist nicht erforderlich.

Es wird vorgeschlagen, dass zur Ermittlung der Größe für jeden Zylinder eine Zeit erfasst wird, die die Kurbelwelle für eine Bewegung über ein bestimmtes Kurbelwinkelintervall benötigt, wobei die Lage des Kurbelwinkelintervalls innerhalb eines Arbeitsspiels für jeden Zylinder gleich ist. Es wird also jedem Zylinder ein Intervall des Drehzahlsignals zugeordnet und die Zeit, die benötigt wird, um das jeweilige Intervall zu vollenden, gemessen. Hierbei kann es sich beispielsweise um die jedem Zylinder zugeordneten Segmentzeiten handeln. Damit kann aus der Lageinformation der Kurbelwelle oder anderer Signale, die mit letzterer korrelieren, jener Zylinder ermittelt werden, welcher die geringste relative Kompression, also die größte Kompressionsverminderung aufweist.

Dabei hat es sich herausgestellt, dass ein solches Kurbelwinkelintervall ein besonders aussagekräftiges Signal liefert, welches innerhalb eines Kompressionstaktes und/oder eines Expansionstaktes eines Zylinders liegt.

Um auf möglichst einfache Art und Weise die gewünschte Relativinformation zu erhalten, kann zur Ermittlung der Größe für einen Zylinder eine Differenz zwischen der für den Zylinder erfassten Zeit und der für den zeitlich nächst folgenden Zylinder erfassten Zeit gebildet werden.

Wie eingangs bereits ausgeführt wurde, ist Grundlage des erfindungsgemäßen Verfahrens, das auf die Brennkraftmaschine keine Schleppkraft einwirkt, sich die Drehzahl der Kurbelwelle also kontinuierlich verringert. Dies hat zur Folge, dass sich die erfassten Zeiten für das bestimmte Kurbelwinkelintervall kontinuierlich verlängern. Dies wird vorteilhafterweise bei der Auswertung des die Drehzahl der Kurbelwelle charakterisierenden Signals dadurch berücksichtigt, dass zur Ermittlung der Größe für einen Zylinder ein Quotient aus der für den Zylinder ermittelten Differenz und der für den zeitlich vorhergehenden Zylinder ermittelten Differenz gebildet wird.

Ein sehr zuverlässiges Ergebnis wird erhalten, wenn jenem Zylinder eine relativ größte Kompressionsverminderung zugeordnet wird, dessen Quotient innerhalb der betrachteten Anzahl von Arbeitsspielen am häufigsten maximal ist.

Dabei wird die Zuverlässigkeit des Ergebnisses nochmals verbessert, wenn einem Zylinder nur dann eine relativ größte Kompressionsverminderung zugeordnet werden kann, wenn die Differenz zwischen dem Quotient dieses Zylinders und dem zweitgrößten Quotient mindestens für eines der betrachteten Arbeitsspiele, vorzugsweise das letzte der betrachteten Arbeitsspiele, einen Grenzwert erreicht oder überschreitet. Die Grenzwertbetrachtung nur beim letzten betrachteten Arbeitsspiel hat den Vorteil, dass bei diesem erwartet werden kann, dass dort der Effekt der Kompressionsverminderung am signifikantesten ist und dadurch der Grenzwert vergleichsweise groß gewählt werden kann.

Vorteilhaft ist es ferner, die Auswertung unterhalb einer gewissen Drehzahl zu beenden, sie also nur oberhalb einer bestimmten unteren Drehzahlschwelle durchzuführen, da unterhalb einer gewissen Drehgeschwindigkeit die Effekte durch Verluste so gravierend sein können, dass sie durch die oben beschriebene Bildung des Quotienten nicht mehr hinreichend kompensiert werden können.

Ferner fördert eine große Zylinderfüllung während des Kompressions- und Arbeitstaktes die Güte der Diagnose. Daher wird vorgeschlagen, dass während der Durchführung des Verfahrens eine Drosselklappe der Brennkraftmaschine möglichst weit geöffnet ist.

Kurze Beschreibung der Zeichnungen

Nachfolgend wird ein besonders bevorzugtes Ausführungsbeispiel der vorliegenden Erfindung unter Bezugnahme auf die beiliegende Zeichnung näher erläutert. In der Zeichnung zeigen:

Figur 1     eine schematische Darstellung einer Brennkraftmaschine mit mehreren Zylindern;

Figur 2     ein Diagramm, in dem die einzelnen Arbeitstakte und Arbeitsspiele der einzelnen Zylinder der Brennkraftmaschine von Figur 1 über der Zeit aufgetragen sind;

Figur 3     ein Blockdiagramm eines Verfahrens zum Betreiben der Brennkraftmaschine von Figur 1;

Figur 4     ein Diagramm, in dem ein gemäß dem Verfahren von Figur 3 ermittelter Quotient für die einzelnen Zylinder über der Anzahl der Arbeitsspiele aufgetragen ist, ohne Kompressionsverluste;

Figur 5     eine Darstellung ähnlich Figur 4, jedoch mit Kompressionsverlusten.

Ausführungsform(en) der Erfindung

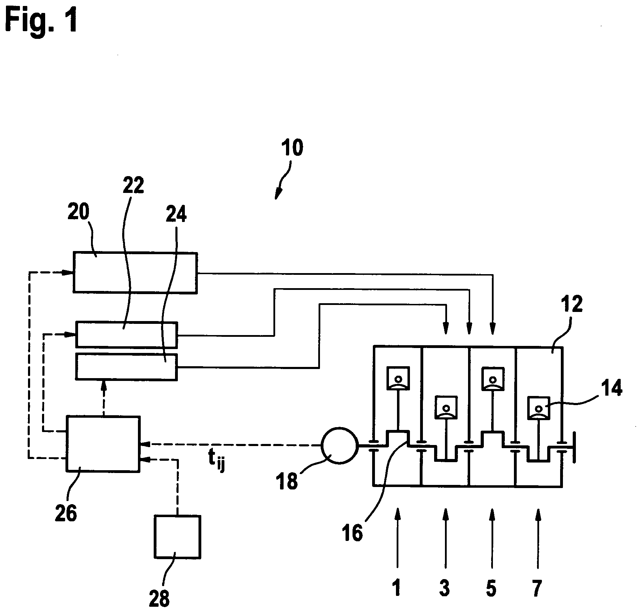

Eine Brennkraftmaschine trägt in Figur 1 insgesamt das Bezugszeichen 10. Sie umfasst einen Motorblock 12 mit insgesamt acht Zylindern, von denen in Figur 1 jedoch nur die Zylinder 1, 3, 5 und 7 gezeigt sind. Jeder Zylinder 1 bis 8 verfügt über einen Kolben, von denen aus Gründen der Übersichtigkeit in Figur 1 nur einer mit dem Bezugszeichen 14 versehen ist. Durch deren Hin- und Herbewegung wird über ein Pleuel (ohne Bezugszeichen) eine Kurbelwelle 16 in Drehung versetzt. Deren Position und Drehzahl wird zeitlich hoch aufgelöst von einem Kurbelwellensensor 18 erfasst.

Der Zustrom von Frischluft in die Zylinder 1 bis 8 wird mittels einer Drosselklappe 20 eingestellt. Die für eine Verbrennung zur Verfügung stehende Kraftstoffmenge wird in die einzelnen Zylinder 1 bis 8 jeweils durch ein Einspritzsystem 22 unmittelbar in den jeweiligen Brennraum eingespritzt. Das weiter unten beschriebene Verfahren ist jedoch genauso bei einer Brennkraftmaschine mit Saugrohreinspritzung denkbar. Ein in den Brennräumen der Zylinder 1 bis 8 vorhandenes Kraftstoff/Luftgemisch wird jeweils von einer Zündanlage 24, welche beispielsweise eine Zündkerze umfasst, entflammt.

Drosselklappe 20, Einspritzsystem 22 und Zündanlage 24 werden von einer Steuer-und Regeleinrichtung 26 angesteuert, die wiederum Signale unter anderem vom Kurbelwinkelsensor 18 und von einem Zündschalter 28 erhält.

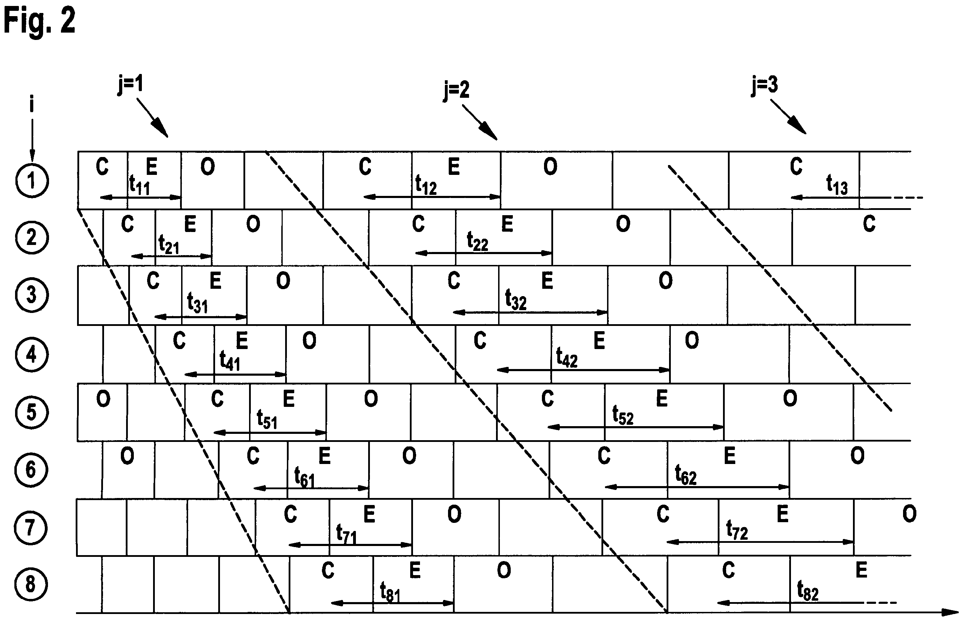

Im Betrieb der Brennkraftmaschine 10 kommt es aufgrund von unvermeidbaren Undichtigkeiten bzw. Leckagen unterschiedlichen Ausmaßes, beispielsweise zwischen Kolben 14 und Motorblock 12, zu unterschiedlichen Druckverläufen in den Zylindern 1 bis 8, insbesondere während des Kompressiontaktes und des Expansionstaktes. Durch diese Leckagen wird der maximale Druck in den Brennräumen der Zylinder 1 bis 8 vermindert, man spricht daher von einer verminderten Kompression. Nachfolgend wird unter Bezugnahme auf die Figuren 2 bis 5 ein Verfahren erläutert, welches es gestattet, jenen Zylinder 1 bis 8 mit der größten Kompressionsverminderung relativ zu den Druckverläufen aller Zylinder anzuzeigen.

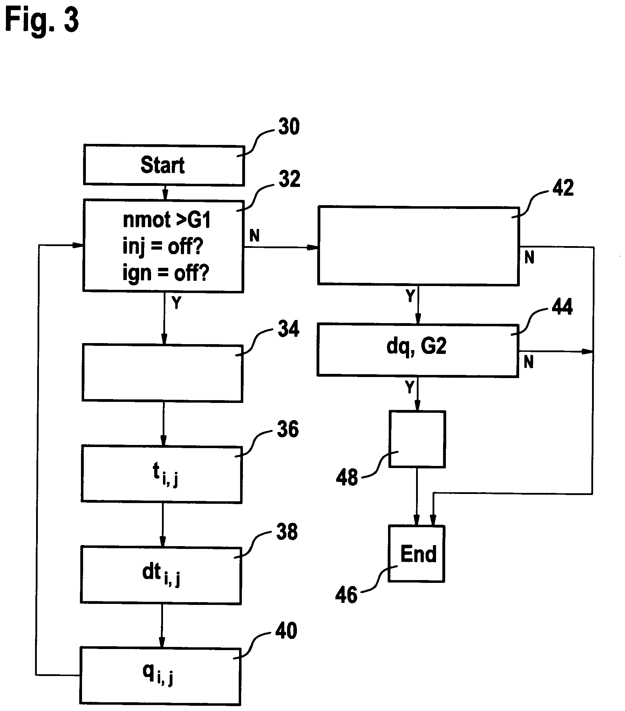

Entsprechend Figur 3 beginnt das Verfahren in einem Block 30. In 32 wird anhand des Signals des Kurbelwellensensors 18 geprüft, ob eine Drehzahl nmot der Kurbelwelle 16 größer ist als ein Grenzwert G1. Ferner wird in 32 geprüft, ob eine Einspritzung inj von Kraftstoff durch das Einspritzsystem 22 abgeschaltet ist, und ob eine Zündung ign durch die Zündanlage 24 abgeschaltet ist. Dies ist beispielsweise dann der Fall, wenn der Benutzer der Brennkraftmaschine 10 durch ein Betätigen des Zündschalters 28 den Wunsch geäußert hat, dass die Brennkraftmaschine 10 abgeschaltet wird. Ist die Antwort in 32 ja, wird in 34 die Drosselklappe 20 aufgesteuert, um während des nun folgenden Auslaufens der Brennkraftmaschine 10 eine große Zylinderfüllung während der Kompressions- und Expansionstakte zu erhalten.

In 36 wird nun für jedes noch folgende Arbeitsspiel j = 1, 2, 3, ... (vgl. Figur 2) für jeden Zylinder i = 1, 2, 3 ... eine Zeit $t_{i,j}$ erfasst, die die Kurbelwelle 16 für eine Drehbewegung über ein bestimmtes Kurbelwinkelintervall benötigt, wobei die Lage und Dauer des Kurbelwinkelintervalls innerhalb eines Arbeitsspiels j = 1, 2, 3, ... für jeden Zylinder i = 1, 2, 3, ... gleich ist. Die entsprechenden Zeitdauern $t_{ij}$ sind in Figur 2 jeweils durch einen Doppelpfeil dargestellt. Die Nummer i für die Zylinder 1 bis 8 beginnt dabei mit jener Nummer, die zum ersten Zylinder 1 bis 8 gehört, dessen zugehörige Zeit ab Beginn der Ausblendung der Einspritzung aufgezeichnet wird. j ist die Nummer des Arbeitsspiels seit Beginn der Aufzeichnung im Block 30. Das Kurbelwinkelintervall ist dabei so gelegt, dass es in der Mitte eines Kompressionstaktes C beginnt und bis zum Ende eines Expansionstaktes E dauert. Ein Ansaugtakt ist in Figur 2 im Übrigen mit den Buchstaben I, ein Auslasstakt in Figur 2 mit dem Buchstaben O bezeichnet.

In 38 wird für jeden Zylinder i und jedes Arbeitsspiel j eine Differenz $dt_{i,j}$ zwischen der für den Zylinder i erfassten Zeit $t_{i,j}$ und der für den zeitlich nächstfolgenden Zylinder i +1 erfassten Zeit $t_{i+1,j}$ gebildet, entsprechend nachfolgender Formel (1).

$$dt_{i,j} = t_{i+1,j} - t_{i,j} \qquad (1)$$

Eine Ausnahme bildet der Übergang zwischen zwei Arbeitsspielen, also beispielsweise dem

Arbeitsspiel j und dem nachfolgenden Arbeitsspiel j +1. Hier gilt die nachfolgende Formel (2):

$$dt_{i,j} = t_{i,j+1} - t_{i,j} \qquad (2)$$

Es kann erwartet werden, dass für jenen Zylinder i, welcher den größten Kompressionsverlust aufweist, die Differenz $dt_{i,j}$ groß ist, im Verhältnis zum vorherigen und folgenden Wert der Differenz $dt_{i,j}$. Der Grund liegt darin, dass es durch die fehlende Expansionsenergie im Zylinder i und die einsetzende Kompression im Zylinder i +1 zu einem Drehzahleinbruch kommt, der eine markante Erhöhung der Differenz $dt_{i,j}$ zur Folge hat im Vergleich zum vorherigen und folgenden Wert der Differenz $dt_{i,j}$.

Aufgrund der kontinuierlich anwachsenden Werte der Zeiten $t_{i,j}$ und der Differenzen $dt_{i,j}$, die sich aus der kontinuierlichen Verzögerung der Bewegung der Kurbelwelle 16 ergeben, werden in 40 Quotienten $q_{i,j}$ aus den Differenzen $dt_{i,j}$ und $dt_{i-1,j}$ gebildet, und zwar entsprechend nachfolgender Formel (3):

$$q_{i,j} = \frac{dt_{i,j}}{dt_{i-1,j}} \qquad (3)$$

Für den Zylinder i = 1 gilt jedoch die nachfolgende Formel (4):

$$q_{i,j} = \frac{dt_{i,j}}{dt_{i\_max,j-1}} \qquad (4)$$

i_max ist die Anzahl der Zylinder der Brennkraftmaschine 10, vorliegend hat i_max also den Wert 8. Erfolgt die Verzögerung der Kurbelwelle 16 nahezu linear, sollte der Effekt der Verzögerung der Kurbelwellendrehzahl nmot durch die Quotientenbildung weitestgehend kompensiert werden.

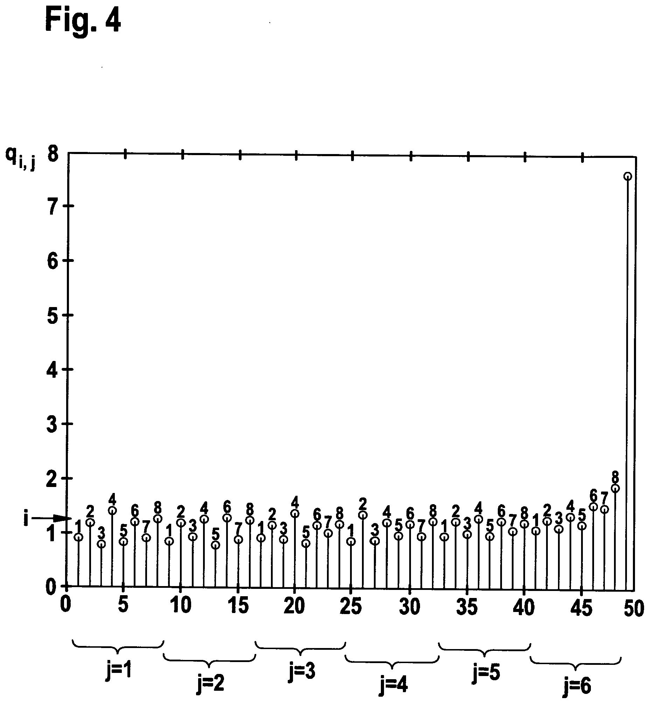

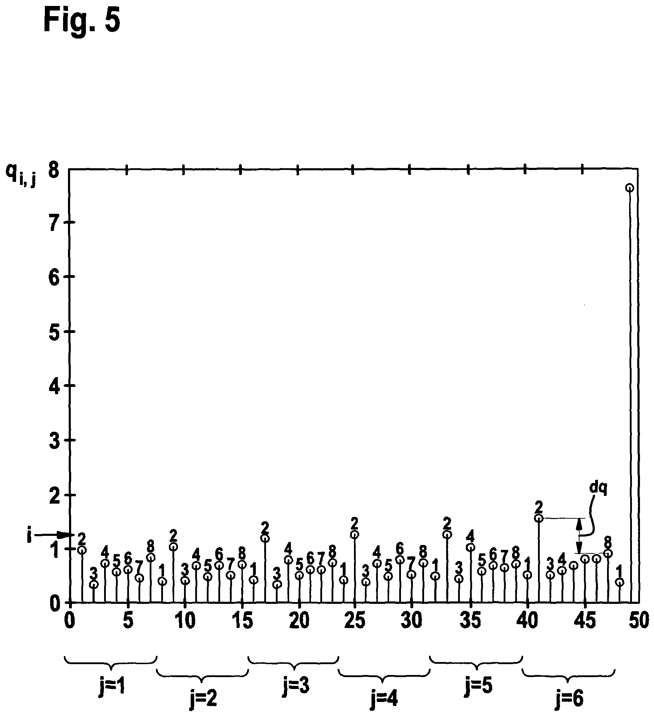

Sobald die Drehzahl mnot der Kurbelwelle 16 unterhalb des Grenzwerts G1 abgesunken ist, erfolgt in 32 ein Sprung zum Block 42, in dem die Quotienten $q_{i,j}$ ausgewertet werden. Bei einer leckagefreien Brennkraftmaschine 10, wie sie im Grunde nur in der Theorie vorkommt, sind die Werte der Quotienten $q_{i,j}$ im Wesentlichen gleichmäßig verteilt, ohne dass der Quotient q für einen bestimmten Zylinder i sich signifikant von den anderen Quotienten q unterscheidet. Dies ist in Figur 4 dargestellt. Wenn jedoch beispielsweise der Zylinder i = 2 den größten Kompressionsverlust hat, wird dessen Quotient $q_{2,j}$ in jedem evaluierten Arbeitspiel j = 1, 2, 3... größer sein als die Quotienten q der anderen Zylinder i = 1, 3, 4, .... Dies ist in Figur 5 gezeigt. Im Umkehrschluss ergibt sich aus der Darstellung von Figur 5, dass jenem Zylinder (vorliegend dem Zylinder i = 2) die relativ gesehen größte Kompressionsverminderung zugeordnet werden kann, dessen Quotient $q_{2,j}$ innerhalb der betrachteten Anzahl j = 1 bis 6 der Arbeitsspiele am häufigsten maximal ist. Wird in 42 ein Zylinder identifiziert, dessen Quotient q in allen Arbeitsspielen j am größten ist, lässt dies auf eine vorhandene Leckage schließen, sodass ein Sprung zum nachfolgenden Block 44 erfolgt. Anderenfalls endet das Verfahren in 46.

In 44 wird für das letzte betrachtete Arbeitsspiel, vorliegend das Arbeitspiel j = 6, die Differenz zwischen dem Quotient $q_{2,6}$ des Zylinders i = 2, der regelmäßig den größten Quotienten q aufgewiesen hat, und dem in diesem Arbeitsspiel j = 6 zweitgrößten Quotient $q_{8,6}$ gebildet. Die entsprechende Differenz ist in Figur 5 mit dq bezeichnet. In 44 wird nun geprüft, ob diese Differenz dq einen Grenzwert G2 mindestens erreicht oder überschreitet. Dieser Vergleich der Differenz dq mit dem Grenzwert G2 erfolgt deshalb lediglich im letzten Arbeitsspiel j = 6, weil hier zu erwarten ist, dass der Effekt am größten ist, sodass der Grenzwert G2 groß gewählt werden kann. Aus der Anzahl der Arbeitsspiele j, bei der der Quotient q für einen bestimmten Zylinder i am größten ist, und aus der Tatsache, dass die Differenz dq größer ist als der Grenzwert G2, ergeben sich, dass die Kompression des Zylinders i, vorliegend des Zylinders i = 2 im Vergleich mit der Kompression der anderen Zylinder i = 1, 3, 4, ... am geringsten ist. Durch den Vergleich der Drehzahl nmot mit dem Grenzwert G1 in 32 wird die Auswertung unterhalb einer gewissen Drehzahl G1 beendet, da hier die Effekte durch Verluste so gravierend sind, dass sie durch die Quotientenbildung in 40 nicht mehr hinreichend kompensiert werden können.

Wenn die Auswertung sowohl in 42 als auch in 44 ergibt, dass ein bestimmter Zylinder i eine maximale Leckage aufweist, erfolgt in 48 ein Eintrag in einen Fehlerspeicher.

## Patentansprüche

1. Verfahren zum Betreiben einer Brennkraftmaschine (10) mit mehreren Zylindern (i), bei dem aus einem eine Drehzahl (nmot) einer Kurbelwelle (16) charakterisierenden Signal in einem Betriebszustand der Brennkraftmaschine (10), in dem keine Verbrennung stattfindet, eine für die Kompression in den jeweiligen Zylindern (i) charakteristische Größe ($q_{i,j}$) ermittelt wird, wobei
die Größe ($q_{i,j}$) in einem Betriebszustand der Brennkraftmaschine (10) ermittelt wird, in dem keine Schleppkraft auf die Brennkraftmaschine (10) einwirkt, wobei
zur Ermittlung der Größe ($q_{i,j}$) für jeden Zylinder (i) eine Zeit ($t_{i,j}$) erfasst wird (36), die die Kurbelwelle (16) für eine Bewegung über ein bestimmtes Kurbelwinkelintervall benötigt, wobei die Lage des Kurbelwinkelintervalls innerhalb eines Arbeitsspiels (j) für jeden Zylinder (i) gleich ist, und wobei
das Kurbelwinkelintervall innerhalb eines Kompressionstaktes (C) und/oder eines Expansionstaktes (E) eines Zylinders (i) liegt, **dadurch gekennzeichnet,**
**dass** zur Ermittlung der Größe ($q_{i,j}$) für einen Zylinder (i) eine Differenz ($dt_{i,j}$) zwischen der für den Zylinder (i) erfassten Zeit ($t_{i,j}$) und der für den zeitlich nächstfolgenden Zylinder (i+1) erfassten Zeit ($t_{i+1,j}$) gebildet wird (38), und
**dass** zur Ermittlung der Größe ($q_{i,j}$) für einen Zylinder (i) ein Quotient ($q_{i,j}$) aus der für den Zylinder (i) ermittelten Differenz ($dt_{i,j}$) und der für den zeitlich vorhergehenden Zylinder (i-1) ermittelten Differenz ($dt_{i-1,j}$) gebildet wird (40).

2. Verfahren nach Anspruch 1, **dadurch gekennzeichnet, dass** jenem Zylinder (i=2) eine relativ größte Kompressionsverminderung zugeordnet wird, dessen Quotient ($q_{2,j}$) innerhalb der betrachteten Anzahl (j) von Arbeitsspielen am häufigsten maximal ist (42).

3. Verfahren nach Anspruch 2, **dadurch gekennzeichnet, dass** einem Zylinder (i=2) nur dann eine relativ größte Kompressionsverminderung zugeordnet werden kann, wenn die Differenz (dq) zwischen dem Quotient ($q_{2,6}$) dieses Zylinders (i=2) und dem zweitgrößten Quotient ($q_{8,6}$) mindestens für eines der betrachteten Arbeitsspiele, vorzugsweise das letzte (j=6) der betrachteten Arbeitsspiele (j), einen Grenzwert (G2) erreicht oder überschreitet (44).

4. Verfahren nach einem der vorhergehenden Ansprüche, **dadurch gekennzeichnet, dass** es nur oberhalb einer minimalen Drehzahl (G1) durchgeführt wird.

5. Verfahren nach einem der vorhergehenden Ansprüche, **dadurch gekennzeichnet, dass** während der Durchführung des Verfahrens eine Drosselklappe (20) der Brennkraftmaschine (10) möglichst weit geöffnet ist.

6. Computerprogramm, **dadurch gekennzeichnet, dass** es zur Durchführung aller Schritte eines Verfahrens nach einem der vorhergehenden Ansprüche programmiert ist.

7. Elektrisches Speichermedium für eine Steuer- und/oder Regeleinrichtung (26) einer Brennkraftmaschine (10), **dadurch gekennzeichnet, dass** auf ihm ein Computerprogramm zur Durchführung aller Schritte eines Verfahrens der Ansprüche 1 bis 5 abgespeichert ist.

8. Steuer- und/oder Regeleinrichtung (26) für eine Brennkraftmaschine (10), **dadurch gekennzeichnet, dass** sie zur Verfahrens nach einem der Ansprüche 1 bis 5 programmiert ist.

**Claims**

1. Method for operating an internal combustion engine (10) having a plurality of cylinders (i), in which a variable ($q_{i,j}$) which is characteristic of the compression in the respective cylinders (i) is determined from a signal characteristic of a rotational speed (nmot) of a crankshaft (16), in an operating state of the internal combustion engine (10) in which combustion does not take place, wherein
the variable ($q_{i,j}$) is determined in an operating state of the internal combustion engine (10) in which there is no drag force acting on the internal combustion engine (10), wherein
in order to determine the variable ($q_{i,j}$) for each cylinder (i) a time ($t_{i,j}$) which the crankshaft (16) requires to move over a specific crankshaft interval is detected (36), wherein the position of the crankshaft interval is the same for each cylinder (i) within a working cycle (j), and wherein
the crankshaft interval lies within a compression stroke (C) and/or an expansion stroke (E) of a cylinder (i), **characterized**
**in that** in order to determine the variable ($q_{i,j}$) for a cylinder (i) a difference ($dt_{i,j}$) is formed between the time ($t_{i,j}$) which is detected for the cylinder and the time ($t_{i+1,j}$) detected for the chronologically following cylinder (i+1), and
**in that** in order to determine the variable ($q_{i,j}$) for a cylinder (i) a quotient ($q_{i,j}$) is formed (40) from the difference ($dt_{i,j}$) determined for the cylinder (i) and the difference ($dt_{i-1,j}$) determined for the chronologically preceding cylinder (i-1).

2. Method according to Claim 1, **characterized in that** that cylinder (i=2) whose quotient ($q_{2,j}$) is at a maximum (42) most frequently within the considered number (j) of working cycles is assigned a relatively largest reduction in compression.

3. Method according to Claim 2, **characterized in that** a cylinder (i=2) can be assigned a relatively largest reduction in compression only when the difference (dq) between the quotient ($q_{2,6}$) of this cylinder (i=2) and the second largest quotient ($q_{8,6}$) at least for one of the considered working cycles, preferably the last (j=6) of the considered working cycles (j), reaches or exceeds (44) a limiting value (G2).

4. Method according to one of the preceding claims, **characterized in that** said method is carried out only above a minimum rotational speed (G1).

5. Method according to one of the preceding claims, **characterized in that** a throttle valve (20) of the internal combustion engine (10) is opened as far as possible during the execution of the method.

6. Computer program, **characterized in that** said computer program is programmed to execute all the steps of a method according to one of the preceding claims.

7. Electrical storage medium for an open-loop and/or closed-loop control device (26) of an internal combustion engine (10), **characterized in that** a computer program for executing all the steps of a method in Claims 1 to 5 is stored in said electrical storage medium.

8. Open-loop and/or closed-loop control device (26) for an internal combustion engine (10), **characterized in that** said open-loop and/or closed-loop control device (26) is programmed to execute all the steps of a method according to one of Claims 1 to 5.

**Revendications**

1. Procédé pour faire fonctionner un moteur à combustion interne (10) comprenant plusieurs cylindres (i), dans lequel une grandeur caractéristique ($q_{i,j}$) pour la compression dans les cylindres respectifs (i) est déterminée à partir d'un signal caractérisant un régime (nmot) d'un vilebrequin (16) dans un état de fonctionnement du moteur à combustion interne (10) dans lequel aucune combustion ne se produit,
la grandeur ($q_{i,j}$) étant déterminée dans un état de fonctionnement du moteur à combustion interne (10) dans lequel aucune force de traction n'agit sur le moteur à combustion interne (10),
pour la détermination de la grandeur ($q_{i,j}$) pour chaque cylindre (i), un temps ($t_{i,j}$) nécessaire pour que le vilebrequin (16) effectue un déplacement sur un intervalle d'angle de vilebrequin déterminée étant détecté (36), la position de l'intervalle d'angle de vilebrequin à l'intérieur d'un cycle de travail (j) étant identique pour chaque cylindre (i) et l'intervalle d'angle de vilebrequin étant situé à l'intérieur d'un temps de compression (C) et/ou d'un temps de détente (E) d'un cylindre (i),
**caractérisé en ce que**
pour la détermination de la grandeur ($q_{i,j}$) pour un cylindre (i), une différence ($dt_{i,j}$) entre le temps ($t_{i,j}$) détecté pour le cylindre (i) et le temps ($t_{i+1,j}$) détecté pour le cylindre suivant (i+1) dans le temps est formée (38), et
**en ce que** pour la détermination de la grandeur ($q_{i,j}$) pour un cylindre (i), un quotient ($q_{i,j}$) de la différence ($dt_{i,j}$) déterminée pour le cylindre (i) et de la différence ($dt_{i-1,j}$) déterminée pour le cylindre précédent (i-1) dans le temps est formé (40).

2. Procédé selon la revendication 1, **caractérisé en ce qu'**à chaque cylindre (i=2) est associée une réduction de compression relativement maximale dont le quotient ($q_{2,j}$) à l'intérieur du nombre considéré (j) de cycles de travail est le plus souvent maximal (42).

3. Procédé selon la revendication 2, **caractérisé en ce qu'**à un cylindre (i=2) ne peut alors être associée qu'une réduction de compression relativement maximale si la différence (dq) entre le quotient ($q_{2,6}$) de ce cylindre (i=2) et le deuxième plus grand quotient ($q_{8,6}$) au moins pour l'un des cycles de travail considéré, de préférence le dernier (j=6) des cycles de travail considérés (j), atteint ou dépasse (44) une valeur limite (G2).

4. Procédé selon l'une quelconque des revendications précédentes, **caractérisé en ce qu'**il n'est mis en oeuvre qu'au-dessus d'un régime minimal (G1).

5. Procédé selon l'une quelconque des revendications précédentes, **caractérisé en ce que** pendant la mise en oeuvre du procédé, un papillon d'étranglement (20) du moteur à combustion interne (10) est ouvert au maximum.

6. Programme informatique, **caractérisé en ce qu'**il est programmé pour exécuter toutes les étapes d'un procédé selon l'une quelconque des revendications précédentes.

7. Support de mémoire électrique pour un dispositif de commande et/ou de régulation (26) d'un moteur à combustion interne (10), **caractérisé en ce qu'**un programme informatique pour exécuter toutes les étapes d'un procédé selon les revendications 1 à 5 est mémorisé sur celui-ci.

8. Dispositif de commande et/ou de régulation (26) pour un moteur à combustion interne (10), **caractérisé en ce qu'**il est programmé pour exécuter toutes les étapes d'un procédé selon l'une quelconque des revendications 1 à 5.

# Fig. 1

# Fig. 2

# Fig. 3

# Fig. 4

# Fig. 5

**EP 1 881 186 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19734680 A1
- DE 10025846 A1
- US 4606224 A
- US 6055852 A